(19) Europäisches Patentamt

European Patent Office

Office européen des brevets

(11) Publication number: **0 136 767**
**B1**

(12) **EUROPEAN PATENT SPECIFICATION**

(45) Date of publication of patent specification: **06.05.87**

(21) Application number: **84300522.4**

(22) Date of filing: **27.01.84**

(51) Int. Cl.⁴: **C 03 C 13/00**

(54) A process for manufacturing ceramic fibres consisting mainly of alumina and silica.

(30) Priority: **04.10.83 JP 186578/83**

(43) Date of publication of application:
**10.04.85 Bulletin 85/15**

(45) Publication of the grant of the patent:
**06.05.87 Bulletin 87/19**

(84) Designated Contracting States:
**AT BE DE FR GB IT LU NL SE**

(56) References cited:
**FR-A-2 272 968**
**FR-A-2 450 795**
**GB-A-1 568 651**
**GB-A-2 124 202**

(73) Proprietor: **ISOLITE BABCOCK REFRACTORIES COMPANY LIMITED**
**7, Aza Mukaiyama Oaza Hagi, Otowa-Cho**
**Hoi-Gun, Aichi-Ken (JP)**

(72) Inventor: **Yamamoto, Masafumi**
**1-11, Daido-Cho**
**Toyokawa City Aichi-Prefecture (JP)**

(74) Representative: **Hartley, David et al**
**c/o Withers & Rogers 4 Dyer's Buildings Holborn**
**London, EC1N 2JT (GB)**

Courier Press, Leamington Spa, England.

## Description

This invention relates to a process for manufacturing ceramic fibres consisting mainly of alumina and silica.

It is known that amorphous ceramic fibers consisting mainly of alumina ($Al_2O_3$) and silica ($SiO_2$) can be produced by melting a material containing 40 to 70% by weight of alumina, 30 to 60% by weight of silica and minor quantities of impurities, and blowing or spinning the molten material. It is also known that the thermal shrinkability of these ceramic fibres can be lowered if they are heated at a temperature not lower than their devitrification temperature so that the crystallization of mullite ($3Al_2O_3.2SiO_2$) mauy take place in the various material.

Amorphous ceramic fibres, however, lose their heat resistance and strength if they are exposed to a temperature about 1,000°C or above for a long time, since a coarse crystal structure is formed by the growth of mullite crystals in glass, and makes the fibres brittle. Ceramic fibres containing mullite crystals have an improved resistance to thermal shrinkage, but it last only for a short time. As the growth of mullite crystals further proceeds, the formation of a coarse crystal structure reduces the strength of the fibre.

U.S. Patent No. 3,449,137 teaches the manufacture of ceramic fibres containing about 1 to 6% by weight of chromium oxide ($Cr_2O_3$) in addition to alumina and silica. This process has been tested, but the ceramic fibres thereby obtained have not shown any appreciable improvement in physical properties. The addition of chromium oxide is not sufficient to prevent the formation of coarse crystals by recrystallization, which results in higher degrees of thermal shrinkage and embrittlement of ceramic fibres, when they are exposed to a high temperature for a long time.

One object of this invention is to enable the manufacture of ceramic fibres which have a high degree of thermal stability even at high temperature. This invention is particularly featured by employing a small quantity of carbon.

In accordance with this invention we propose a process for manufacturing ceramic fibres, which comprises melting a material containing 35 to 65% by weight of alumina, 30 to 60% by weight of silica, 1.5 to 4% by weight of chromium oxide and 0.01 to 0.1% by weight of carbon, forming amorphous fibres from the molten material, heating the fibres rapidly to a temperature of 950°C to 1,150°C, holding them at that temperature for a predetermined time, preferably for several to a dozen or so minutes, and cooling them rapidly to ordinary room temperature.

The high thermal stability of the fibres is due to the separation of phases which takes place in the vitreous structure as a result of the heat treatment at a relatively low temperature. The fibres have a coefficient of linear shrinkage not exceeding 2% even if they are exposed to a temperature of 1,300°C or above. They do not undergo any appreciable embrittlement.

Embodiment of the invention will now be described by way of example with reference to the accompanying drawings in which:-

Figure 1 shows by X-ray diffraction patterns the relationship between the quantity of chromium oxide in ceramic fibres and the formation of mullite crystals therein;

Figure 2 shows by X-ray diffraction patterns the relationship between the temperature for the heat treatment of ceramic fibres and the formation of mullite crystals therein; and

Figure 3 is an electron microphotograph (at 10,000 magnifications) of ceramic fibres treated in accordance with this invention, and etched.

In accordance with this invention, a material containing 35 to 65% by weight of alumina ($Al_2O_3$), 30 to 60% by weight of silica ($SiO_2$), 1.5 to 4% by weight of chromium oxide ($Cr_2O_3$) and 0.01 to 0.1% by weight of carbon, the balance being unavoidable impurities is first melted, for example, in an electric furnace. Amorphous fibres are then formed from the molten material by any conventional method, such as blowing or spinning, known to those skilled in the art.

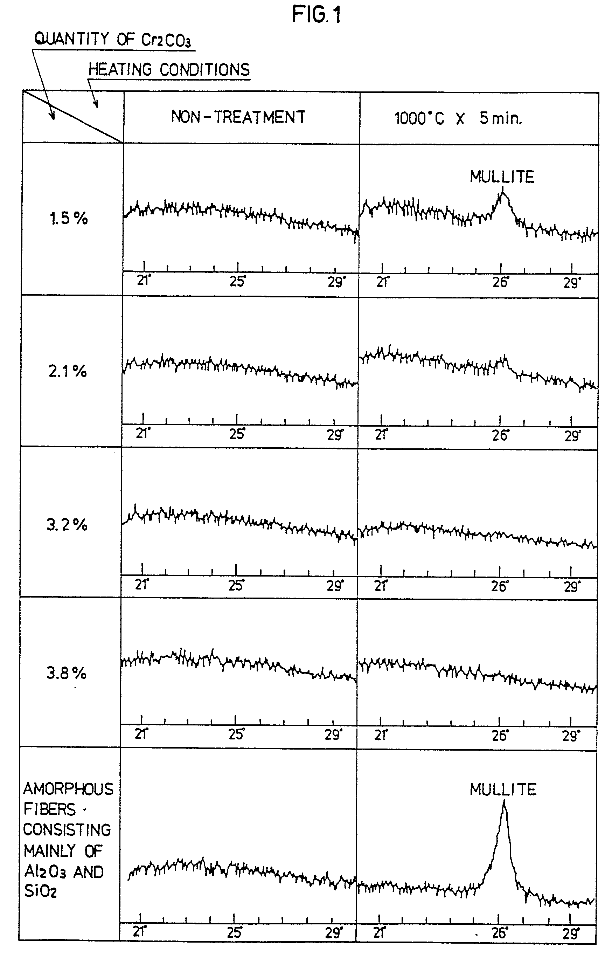

We propose to use at least 1.5% by weight of $Cr_2O_3$ and at least 0.01% by weight of carbon. If less $Cr_2O_3$ and carbon are used, the formation of mullite crystals proceeds markedly, and embrittles the fibres, even if they are heat treated in accordance with this invention, as is obvious from the X-ray diffraction patterns in Figure 1. The use of more than 4% by weight of $Cr_2O_3$ and more than 0.1% by weight of carbon does not produce appreciably better results. The use of carbon in addition to $Cr_2O_3$ is important for avoiding the formation of coarse crystals in ceramic fibres, which results in an increase in their thermal shrinkage, and a reduction in their resiliency due to embrittlement, when they are exposed to a high temperature for a long time.

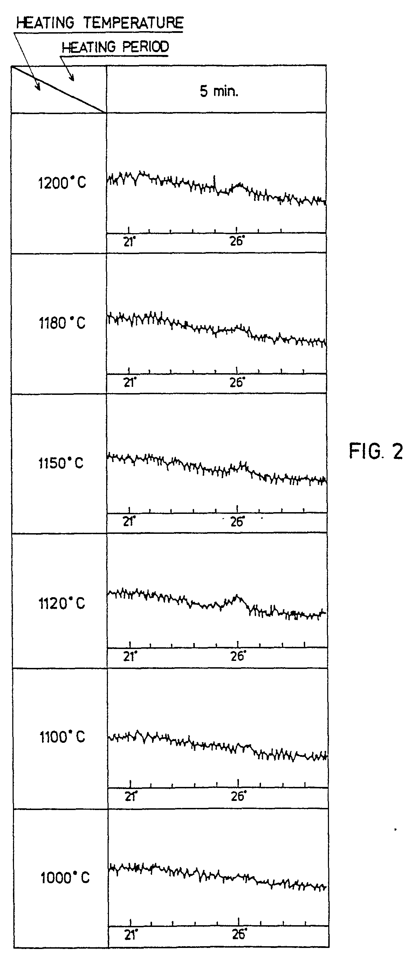

The fibres are heated to a temperature of 950°C to 1,150°C, and held at that temperature for a period of several to a dozen or so minutes. These conditions have been experimentally found necessary and sufficient for causing the separation of phases in the amorphous structure of the ceramic fibres. If the fibres are held at a temperature below 950°C for a shorter time than the specified range, no satisfactory improvement in their resistance to thermal shrinkage can be expected, as will be obvious from the following description. If the fibres are held at a temperature above 1,150°C for a longer than the specified time the formation of mullite crystals proceeds, and embrittles the fibres, as is obvious from the following description, and Figure 2 showing the X-ray diffraction patterns of the fibres containing 3.8% by weight of $Cr_2O_3$.

The fibres are heated rapidly to a temperature of 950°C to 1,150°C, since only rapid heating enables the separation of phases in the ceramic structure. If the fibres are heated slowly, they have a linear shrinkage coefficient exceeding 2% when they are exposed to a temperature of 1,300°C or above for a long time, and moreover, the embrittlement of the fibres takes place. Experimental results, indicate that it is preferable to heat the fibres at a rate of 100°C to 1,000°C per minute.

In one example a material containing 40% by weight of $Al_2O_3$, 56% by weight of $SiO_2$, 3.3% by weight of $Cr_2O_3$ and 0.1% by weight of carbon, the balancing being unavoidable impurities, was melted in an electric furnace. The molten material was formed by blowing into amorphous fibres having an average diameter of 2.5 micrometers and a maximum length of 150mm. A blanket having a thickness of 25mm and a bulk specific density of 0.14 was formed from the fibres, and heat treated under the conditions shown in Tables 1 and 2. Table 1 shows the linear shrinkage of the blankets heated at a temperature of 1,000°C to 1,400°C for 24 hours. Table 2 shows the resiliency of the fibres in terms of the restorability of blanket thickness after compression under heat. The blanket was heated under the conditions shown in Table 2, and compressed to a half in thickness.

3

0 136 767

TABLE 1
Linear shrinkage of fibres under heat (%)

| Sample | A (Invention) | B | C | D | E | F |
|---|---|---|---|---|---|---|
| Heat treating conditions | 1,000°C 5 min. Heating rate: 1,000°C/min. | 800°C 5 min. Heating rate: 1,000°C/min. | 1,200°C 5 min. Heating rate: 1,000°C/min. | 1,000°C 5 min. Heating rate: 50°C/min. | 1,000°C 20 min. Heating rate: 1,000°C/min. | No heat treatment |
| Heating conditions 1,000°C, 24 h | 0.2 | 1.7 | +0.3 | 0.4 | 0.1 | 1.7 |
| 1,200°C, 24 h | 0.7 | 2.9 | +0.1 | 0.9 | 1.5 | 2.9 |
| 1,300°C, 24 h | 1.0 | 3.8 | 0.5 | 2.1 | 2.1 | 3.8 |
| 1,400°C, 24 h | 1.4 | 4.5 | 0.8 | 2.3 | 4.8 | 4.5 |
| Defects found after heating | | | Powdering, deterioration and difficulty in handling due to embrittlement | Hardening | Hardening and powdering at high temperature | |

## TABLE 2

Restorability of thickness of the blankets heat treated under the conditions shown in Table 1, and compressed to a half in thickness (%)

| Sample | A (Invention) | B | C | D | E | F |
|---|---|---|---|---|---|---|
| Heating condiions 900°C, 50 h | 15.8 | 4.3 | 4.7 | 12.4 | 11.4 | 1.6 |
| 900°C, 100 h | 12.1 | 2.6 | 3.4 | 8.8 | 7.8 | 1.2 |
| 900°C, 300 h | 8.4 | 2.3 | 2.8 | 3.7 | 2.6 | 1.1 |
| 1,000°C, 50 h | 3.8 | 2.2 | 2.3 | 2.5 | 1.9 | 0.9 |

It will be seen from Tables 1 and 2, that a blanket of ceramic fibres can be produced having a coefficient of linear shrinkage less than 2% when heated at 1,300°C for 24 hours, and which is satisfactory resilient.

The thermal stability and resiliency of a blanket of ceramic fibers produced by the method of this invention are apparently due to the separation of phases. The chromium oxide ($Cr_2O_3$) replaces a part of $Al_2O_3$ in the $Al_2O_3$—$SiO_2$ glass structure, and causes a stress in its lattice to inhibit crystallization. In the presence of a small quantity of atomic carbon, it is scattered in the lattices of the glass structure, and restricts their rearrangement. The rapid heating shortens the distance of diffusion of the constituents in the glass structure, and inhibits their crystallization, whereby there are formed a lot of finely divided separate phases consisting mainly of $Cr_2O_3$ and having different proportions of constituents.

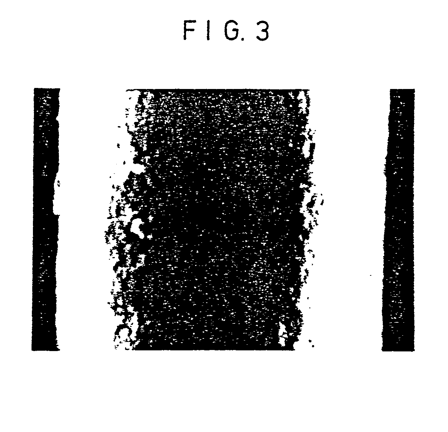

The ceramic fibres having separate phases hardly undergo recyrstallization even if they are exposed to a high temperature. Even if recrystallization occurs following exposure to a higher temperature for a long time, the crystals are very small, since the separate phases forming the crystal grains, in which $Cr_2O_3$ forming the nucleus of the crystal coexists with carbon, are scattered numerously. The adjoining crystal grains mutually restrict their growth, and yield fibres composed of numerous fine crystals. These fibres provide a thermally stable and resilient blanket. As will be seen from Figure 3, the fibres as a whole comprise finely divided separate phases. On the other hand, fibres not containing such separate phases and crystals are totally melted by similar etching treatment.

### Claims

1. A process for manufacturing ceramic fibres consisting mainly of alumina and silica, which comprises:

melting a material containing 35 to 65% by weight of $Al_2O_3$, 30 to 60% by weight of $SiO_2$, 1.5 to 4% by weight of $Cr_2O_3$ and 0.01 to 0.1% by weight of carbon, the balance being unavoidable impurities;

forming amorphous fibres from the molten material;

heating the amorphous fibres rapidly to a temperature of 950°C to 1,150°C;

holding them at the said temperature for several to a dozen or so minutes; and

rapidly cooling the fibres to room temperature.

2. A process according to claim 1, wherein the fibres are heated to the said temperature at a rate of 100°C to 1,000°C per minute.

3. A process according to claim 1 or claim 2, wherein the fibres are formed by either blowing of spinning.

4. A process according to claim 3, wherein the material is melted in an electric furnace.

### Patentansprüche

1. Verfahren zur Herstellung von hauptsächlich aus Tonerde und Kieselerde bestehenden Keramikfasern, wobei

ein Material bestehend aus 35 bis 65 Gew.% $Al_2O_3$, 30 bis 60 Gew.% $SiO_2$, 1,5 bis 4 Gew.% $Cr_2O_3$ und 0,01 bis 0,1 Gew.% Kohlenstoff geschmolzen wird und der Rest auf die unvermeidlichen Verunreinigungen entfällt,

aus dem geschmolzenen Material amorphe Fasern gebildet werden;

die amorphen Fasern rasch auf eine Temperatur von 950°C bis 1150°C erwärmt werde;

diese einige bis etwa 12 Minuten lang auf dieser Temperatur gehalten, werden und

die Fasern rasch auf Raumtemperatur abgekühlt werden.

2. Verfahren nach Anspruch 1, bei dem Fasern mit einer Geschwindigkeit von 100°C bis 1000°C pro Minute auf diese Temperatur erwärmt werden.

3. Verfahren nach Anspruch 1 oder 2, bei dem Fasern entweder durch Blasen oder durch Spinnen gebildet werden.

4. Verfahren nach Anspruch 3, bei dem das Material in einem Elektroofen geschmolzen wird.

### Revendications

1. Procédé se fabrication de fibres céramiques formées essentiellement d'alumine et de silice, procédé caractérisé en ce qu'il cosiste à:

faire fondre un matériau contenant de 35 à 65% en poids d'$Al_2O_3$, de 30 à 60% en poids de $SiO_2$, de 1,5 à 4% en poids de $Cr_2)_3$, et de 0,1 à 0,01% en poids de carbone, l'equilibre contenant inévitablement des impurités;

à former des fibres amorphes à partir du matériau en fusion;

à chauffer rapidement les fibres amorphes à température de 950°C à 1.150°C;

à les maintenir à cette température pendant une durée de quelques minutes à une douzaine de minutes ou plus;

et à refroidir rapidement les fibres à la température ambiante.

2. Procédé selon la revendication 1, caractérisé en ce que les fibres sont chauffées à la température indiquée à un rythme de 100°C à 1000°C par minute.

3. Procédé selon l'une quelconque des a revendications 1 et 2, caractérisé en ce que les fibres sont formées soit par soufflage, soit par filage.

4. Procédé selon la revendication 3, caractérisé en ce que le matériau est fondu dans un four électrique.

## FIG.1

QUANTITY OF $Cr_2CO_3$

HEATING CONDITIONS

| | NON-TREATMENT | 1000°C X 5min. |
|---|---|---|
| 1.5 % | | MULLITE |
| 2.1 % | | |
| 3.2 % | | |
| 3.8 % | | |
| AMORPHOUS FIBERS · CONSISTING MAINLY OF $Al_2O_3$ AND $SiO_2$ | | MULLITE |

FIG. 2

## F I G. 3